# EUROPÄISCHE PATENTANMELDUNG

(11) **EP 3 890 082 A1**
(43) Veröffentlichungstag der Anmeldung: **06.10.2021**
(21) Anmeldenummer: 20167354.8
(22) Anmeldetag: 31.03.2020
(51) Int. Cl.: H01M 8/1004, H01M 8/2404, H01M 8/241, B32B 38/00, B32B 38/18

(54) **KONTINUIERLICHES STAPELN VON ZUSCHNITTEN MINDESTENS EINER FOLIEN- ODER MEMBRAN-ARTIGEN WARENBAHN AUF EINEN STAPEL**

(71) Anmelder: Siemens Aktiengesellschaft, 80333 München (DE)
(72) Erfinder: May, Torsten, 91088 Bubenreuth (DE); Pils, Jonas, 91054 Buckenhof (DE); Wolke da Silva, Luciano, 92353 Postbauer-Heng (DE)

(57) **Zusammenfassung**

Die Erfindung betrifft ein Verfahren zum kontinuierlichen Stapeln von Zuschnitten mindestens einer folien- oder membran-artigen Warenbahn auf einen Stapel, wobei die mindestens eine folien- oder membran-artige Warenbahn kontinuierlich zugeführt wird , wobei die mindestens eine folien- oder membran-artige Warenbahn auf eine von den Abmessungen des Stapels abhängige Größe zu einem Zuschnitt zugeschnitten wird, wobei der Zuschnitt von einem Magazin einer sich kontinuierlich bewegenden, insbesondere rotierenden, Umlagerungsvorrichtung mit mehreren Magazinen aufgenommen wird, wobei der aufgenommene Zuschnitt von dem Magazin auf den Stapel umgelagert wird, bevor das Magazin einen nachfolgenden Zuschnitt aufnimmt.

Die Erfindung betrifft ferner ein Stapelsystem zum kontinuierlichen Stapeln von Zuschnitten mindestens einer folien- oder membran-artigen Warenbahn.

## Beschreibung

Die Erfindung betrifft ein Verfahren und ein Stapelsystem zum kontinuierlichen Stapeln von Zuschnitten mindestens einer folien- oder membran-artigen Warenbahn auf einen Stapel.

Im Rahmen der Suche nach Alternativen zu konventionellen Verbrennungsmotoren in der Automobilindustrie stehen Batterien im Fokus der Forschung und Entwicklung. Für den breiten Einsatz von Elektromotoren als Antriebsquelle im Verkehr und Logistikumfeld ist eine effiziente Herstellungsmöglichkeit von Batterien essenziell. Zur Herstellung einer Batteriezelle werden je nach Art der Batterie unterschiedliche Verfahren angewendet. Dabei kommt es unter anderem darauf an, welches Format die zugrundeliegenden Batteriezellen aufweisen. Beispielsweise werden Stapelverfahren, sogenanntes Stacking, beispielsweise für Pouch-Zellen eingesetzt, wobei in abwechselnder Reihenfolge Separator, Anode, Separator und Kathode aufeinandergelegt werden. Das Stapeln erfolgt in der Regel sequenziell und mittels sogenannter Pick-and-Place-Verfahren. Dadurch ist die Dynamik aufgrund der Massenträgheit beteiligter Aktoren, beispielsweise von Roboterarmen, die die Greif- und Umlegbewegung durchführen, begrenzt. Somit stellt das Stapeln, welches zugleich ein qualitativ hochwertiges Verfahren für die Zellstapelbildung ist, einen Engpass innerhalb der Batteriefertigung dar.

Ein alternatives Fertigungsverfahren stellt das zylindrische oder prismatische Wickeln dar, welches höhere Produktionsgeschwindigkeiten ermöglicht als das Stapeln. Jedoch kann damit nur eine begrenzte Energiedichte in den Batteriezellen oder Batteriemodulen erreicht werden, so dass das herkömmliche Wickeln regelmäßig als Fertigungsverfahren ausscheidet.

Beim prismatischen Wickel-Prozess ist zudem in nachteiliger Weise leicht eine Beschädigung der empfindlichen Folien, die für Batteriezellen zum Einsatz kommen, möglich. Vor allem durch enge Radien beim Wickeln können Beschädigungen hervorgerufen werden, so dass eine prismatisch gewickelte Zelle während des Alterungsprozesses potentiell sehr heiß werden kann oder das Brennen anfangen könnte.

Mittels sogenannter Z-folding-Verfahren können Separatorfolien beispielsweise mit Hilfe von Greifern gefaltet werden und somit annäherungsweise ein Stapel gebildet werden. Elektrodenmaterial wird dabei vorab auf verschiedene Seiten der Separatorfolie aufgebracht.

Die gleichen Herausforderungen bestehen bei der Herstellung von Brennstoffzellen. Auch hier besteht wegen der hohen Nachfrage nach alternativen Antriebsquellen ein erhöhter Bedarf an effizienten Fertigungsverfahren. Auch bei der Herstellung von Brennstoffzellen bremsen Pick-and-Place-Verfahren zum Stapeln von Bipolarplatten und dazwischenliegenden Membranen die Herstellungsgeschwindigkeit.

Vor diesem Hintergrund ist es eine Aufgabe der vorliegenden Erfindung, ein verbessertes Fertigungsverfahren für Batterien und Brennstoffzellen bereitzustellen. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zum kontinuierlichen Stapeln von Zuschnitten mindestens einer folien- oder membran-artigen Warenbahn auf einen Stapel,
- wobei die mindestens eine folien- oder membran-artige Warenbahn kontinuierlich zugeführt wird,
- wobei die mindestens eine folien- oder membran-artige Warenbahn auf eine von den Abmessungen des Stapels abhängige Größe zu einem Zuschnitt zugeschnitten wird,
- wobei der Zuschnitt von einem Magazin einer sich kontinuierlich bewegenden, insbesondere rotierenden, Umlagerungsvorrichtung mit mehreren Magazinen aufgenommen wird,
- wobei der aufgenommene Zuschnitt von dem Magazin auf den Stapel umgelagert wird, bevor das Magazin einen nachfolgenden Zuschnitt aufnimmt.

Mit dem vorgeschlagenen Verfahren werden auf vorteilhafte Weise die Vorzüge der Stapeltechnik für die Fertigung von Batteriezellen gegenüber der prismatischen Wickeltechnik mit den Vorzügen der kontinuierlichen Zuführung gegenüber den diskontinuierlichen Pick-and-Place-Bewegungen kombiniert. Ebenso wird für die Fertigung von Brennstoffzellen vorteilhaft die Stapeltechnik mit einer kontinuierlichen Zuführung kombiniert.

Durch das Verwenden der Umlagerungsvorrichtung mit mehreren Magazinen und das Aufnehmen von zugeschnittenen Teilen der Warenbahn in separate Magazine werden die Zuschnitte, welche den Stapel für eine Batteriezelle oder eine Brennstoffzelle bilden, kontinuierlich gestapelt. Dadurch werden auf vorteilhafte Weise hohe Fertigungsgeschwindigkeiten erzielt. Zugleich können qualitativ hochwertige Batteriezellen und Batteriemodule gefertigt werden, welche insbesondere keine Beschädigungen durch Wickel oder Z-folding-Verfahren aufweisen. Auf vorteilhafte Weise entfallen auch die Greifvorgänge, welche in einem Pick-and-Place-Verfahren notwendig sind.

Das Stapeln von Membranen und Bipolarplatten mittels der Umlagerungsvorrichtung für die Herstellung von Brennstoffzellen wird vorteilhaft beschleunigt gegenüber einem Pick-and-Place-Verfahren aller zu stapelnden Schichten.

Die Umlagerungsvorrichtung bewegt sich kontinuierlich und kann sich dabei beispielsweise mit variabler Geschwindigkeit bewegen. Beispielsweise rotiert die Umlagerungsvorrichtung kontinuierlich mit variabler oder konstanter Rotationsgeschwindigkeit.

Beispielsweise ist ein Magazin für die Aufnahme eines Zuschnitts je Bewegungszyklus zuständig. Beispielsweise nimmt während einer Umdrehung der Umlagerungsvorrichtung ein Magazin an einer ersten Stelle oder zu einem ersten Zeitpunkt einen Zuschnitt auf und lagert diesen an einer zweiten Stelle oder an einem zweiten Zeitpunkt auf den Stapel um, beispielsweise durch Ablegen auf dem Stapel. Durch Weiterdrehen der Umlagerungsvorrichtung gelangt das Magazin wieder an die erste Stelle und kann zu einem nächsten Zeitpunkt einen nachfolgenden Zuschnitt aufnehmen.

Das Magazin ist zur Aufnahme des Zuschnitts ausgebildet sowie zum nachfolgenden Umlagern des Zuschnitts auf den Stapel. Je nach Anzahl der vorgesehenen Magazine in der Umlagerungsvorrichtung kann die Geschwindigkeit der Zuförderung der Warenbahn eingestellt werden. Je mehr Magazine, desto schneller kann beispielsweise die Beförderung durch die Abwickel- oder Umlenkwalze erfolgen.

2Gemäß einer Ausgestaltung wird die mindestens eine folien- oder membran-artige Warenbahn mittels einer Abwickel- oder Umlenkwalze zugeführt.

3Gemäß einer Ausgestaltung ist die mindestens eine folien- oder membran-artige Warenbahn als eine Separatorfolie oder eine Elektrodenfolie für eine Batteriezelle ausgebildet. Auf vorteilhafte Weise können so verschiedene Magazine der Umlagerungsvorrichtung mit Elektrodenfolienzuschnitten und Separatorfolienzuschnitten bestückt werden, so dass Elektrodenfolienzuschnitten und Separatorfolienzuschnitten abwechselnd auf dem Stapel abgelegt werden.

4Gemäß einer Ausgestaltung ist die mindestens eine folien- oder membran-artige Warenbahn als eine Membran für eine Brennstoffzelle ausgebildet ist. Bei Brennstoffzellen werden Bipolarplatten beispielsweise via Hydroforming hergestellt und dieser werden dann beispielsweise im Wechsel mit einer Membranschicht gestapelt.

5Gemäß einer Ausgestaltung werden mehrere folien- oder membran-artige Warenbahnen zugeführt und als ein gemeinsamer Zuschnitt zugeschnitten. Beispielsweise werden Elektroden und Separatorfolien in einem vorgelagerten Verfahrensschritt derart übereinander gelagert, dass die gebildete geschichtete Warenbahn die Ausgangsbasis für durch Zuschneiden der Warenbahn stapelbare Zuschnitte darstellt. Somit wird bereits kontinuierlich eine Kombination aus Elektroden- und Separatorfolie, insbesondere bestehend aus Anoden-, Separator-, Kathoden- und weiterer Separatorschicht, zugeführt, welche in das Magazin aufgenommen wird.

6Gemäß einer Ausgestaltung werden mehrere hintereinanderfolgend zugeschnittene gemeinsame Zuschnitte in jeweilige Magazine der Umlagerungsvorrichtung aufgenommen und hintereinander folgend auf den Stapel umgelagert. Durch die Umlagerungsvorrichtung werden die zugeschnittenen einzelnen Schichtpakete übereinander gestapelt und bilden auf dem Stapel durch kontinuierliches Ausführen der oben beschriebenen Schritte eine Batteriezelle.

7Gemäß einer Ausgestaltung werden mehrere folien- oder membran-artige Warenbahnen zugeführt und als jeweiliger separater Zuschnitt zugeschnitten. Beispielsweise wird jeweils an einer geeigneten Stelle vor dem Magazin das Zuschneiden vorgenommen. Aus Platzgründen kann beispielsweise das Zuschneiden mit unterschiedlich großem Abstand zu dem jeweiligen Register erfolgen.

8Gemäß einer Ausgestaltung werden die jeweiligen Zuschnitte in jeweilige Magazine der Umlagerungsvorrichtung aufgenommen werden und hintereinander folgend auf den Stapel umgelagert. Sowohl bereits vorab gebildete Schichtpakete als auch einzelne Schichten einer Batteriezelle können somit in den verschiedenen Magazinen der Umlagerungsvorrichtung durch eine oder mehrere zugeführte Warenbahnen auf den Stapel umgelagert werden und somit die Batteriezelle bilden.

9Gemäß einer Ausgestaltung werden jeweils eine folien- oder membran-artige Warenbahn kontinuierlich von einer jeweiligen von mehreren Abwickel- oder Umlenk-Walzen befördert. Je nach Beschränkungen der Geschwindigkeit des Abwickelns können durch den Einsatz mehrerer Abwickel- oder Umlenkwalzen auf vorteilhafte Weise mehrere Magazine gleichzeitig befüllt werden und dadurch kann eine höhere Prozessgeschwindigkeit erreicht werden. Beispielsweise können die mehreren Abwickel- oder Umlenkwalzen übereinander oder hintereinander, insbesondere vertikal übereinander oder versetzt übereinander, angeordnet sein.

10Gemäß einer Ausgestaltung sind mindestens drei folien- oder membranartige Warenbahnen, insbesondere eine Anodenfolie, eine Separatorfolie und eine Kathodenfolie, vorgesehen. Beispielsweise werden mindestens drei Folien oder membranartige Warenbahnen, insbesondere eine Anodenfolie, eine Separatorfolie und eine Kathodenfolie zugeführt. Beispielsweise werden somit die jeweiligen Zuschnitte, die jeweils eine Schicht einer Batteriezelle bilden, separat vorbereitet und aufeinander folgende Magazine der Umlagerungsvorrichtung abwechselnd mit den Zuschnitten bestückt. Insbesondere befördert die Abwickel- oder Umlenkwalze, welche die Separatorfolie befördert, mit einer höheren Geschwindigkeit, so dass nach jeder Anodenfolie oder Kathodenfolie eine Separatorfolie in das Magazin aufgenommen werden kann.

llGemäß einer Ausgestaltung sind mindestens vier folien- oder membran-artige Warenbahnen, insbesondere eine Separatorfolie, eine Anodenfolie, eine weitere Separatorfolie und eine Kathodenfolie vorgesehen. Beispielsweise wird so eine Batteriezelle auf dem Stapel gebildet, indem insbesondere auf eine Separatorfolie eine Kathoden- oder Anodenfolie, auf die Kathoden- oder Anodenfolie eine weitere Separatorfolie und auf die weitere Separatorfolie eine Anoden- bzw. Kathodenfolie folgt und dieser Vorgang fortwährend wiederholt wird. Somit wird jeweils eine von vier der späteren Batteriezellenschichten separat befördert. Aufeinanderfolgende Magazine nehmen die Zuschnitte jeweils separat auf, so dass durch Umlagerung der vier Zuschnitte hintereinander eine Batteriezelle auf dem Stapel gebildet wird. Insbesondere erfolgt besonders vorteilhaft das Fördern der jeweiligen Elektroden- und Separatorfolien kontinuierliches, das Aufnehmen der jeweiligen Zuschnitte in die Magazine kontinuierlich und auch das Ablegen auf dem Stapel kontinuierliches. Somit kann eine besonders hohe Fertigungsgeschwindigkeit erzielt werden.

Den oben beschrieben Ausführungen kann sich ein Schritt anschließen, bei dem die auf dem Stapel gebildete Schichten aus Zuschnitten einer weiteren Verarbeitungseinrichtung zum Fertigen einer Batteriezelle als Endprodukte des Fertigungsvorganges oder zum Erstellen eines aus der Batteriezelle weiter fertigbaren Batteriemoduls bereitgestellt wird. In einem nachfolgenden Bearbeitungsschritt erfolgen beispielsweise weitere Schritte einer Batteriezellassemblierung, wie ein Einbringen in die Verpackung und ein Befüllen mit Elektrolyt. Es schließen sich weitere Schritte wie die Formation und das Aging an.

Die Erfindung betrifft ferner ein Stapelsystem zum kontinuierlichen Stapeln von Zuschnitten mindestens einer folien- oder membran-artigen Warenbahn auf einen Stapel, aufweisend
- eine kontinuierliche Zuführeinrichtung, insbesondere eine Abwickel- oder Umlenk-Walze, zum kontinuierlichen Zuführen mindestens einer folien- oder membran-artigen Warenbahn,
- eine Schneidevorrichtung zum Zuschneiden eines Zuschnitts der mindestens einen folien- oder membran-artigen Warenbahn auf eine von den Abmessungen des Stapels abhängige Größe,
- eine sich kontinuierlich bewegende Umlagerungsvorrichtung mit mehreren Magazinen zum Aufnehmen des Zuschnitts durch eines der mehreren Magazine, wobei der aufgenommene Zuschnitt von dem Magazin auf den Stapel umlagerbar ist, bevor das Magazin einen nachfolgenden Zuschnitt aufnimmt.

Die Abwickel- oder Umlenkwalze kann dabei Bestandteil eines Abwickelsystems aus mehreren Walzen, insbesondere aus Abwickel- und Umlenkwalzen, sein. Üblicherweise sind eine Vielzahl von Walzenpaaren beteiligt, um eine möglichst genaue Führung der Warenbahn zu erreichen. Zusätzlich können Komponenten, die mit der Umlagerungsvorrichtung auf dem Stapel abgelegt werden sollen, können auch über Mittel wie Greifer oder generell Roboter zugeführt werden.

Beispielsweise wird bei der Fertigung von Brennstoffzellen eine Membran als Warenbahn kontinuierlich zugeführt, zugeschnitten und die Zuschnitte werden in die Magazine befördert. Eine Bipolarplatte wird ebenfalls möglichst kontinuierlich zugeführt und beispielsweise abwechselnd mit der Membran oder weiteren Komponenten in die Magazine eingelegt. In anderen Ausführungen kann die Bipolarplatte auch unabhängig von der Umlagerungsvorrichtung auf dem Stapel abgelegt werden, ebenfalls im Wechsel mit den Zuschnitten aus den Magazinen.

Als Schneidevorrichtung kommen gängige Schneider, beispielsweise Querschneider oder Laserschneider, zum Einsatz, welche auf die Eigenschaften der Folie oder Membran abgestimmt sind.

Der Stapel umfasst beispielsweise bereits zugeschnittene Schichten der Folie oder Membran und nimmt durch geeignete Anordnung hinter oder unter der Umlagerungsvorrichtung weitere Zuschnitte als Schichten auf. Dadurch wird auf dem Stapel insbesondere eine Batteriezelle oder eine Brennstoffzelle geschichtet oder gebildet. Der Stapel umfasst neben den aufgestapelten Schichten aus Zuschnitten beispielsweise ferner ein Gehäuse, welches sicherstellt, dass die Zuschnitte passgenau übereinander zu liegen kommen.

In einer Ausgestaltung sind die Magazine an der Umlagerungsvorrichtung durchgehend angebracht, so dass in einer beliebigen Position der sich bewegenden Umlagerungsvorrichtung ein Magazin für die Aufnahme eines Zuschnitts zur Verfügung steht. Beispielsweise werden nicht alle Magazine der Umlagerungsvorrichtung permanent verwendet. Beispielsweise sind benachbarte Magazine nicht zu einer gemeinsamen Zeitspanne befüllt. Je mehr Magazine vorgesehen sind, desto besser ist die Aufnahme eines Zuschnitts von der zu fördernden Abwickel- oder Umlenkwalze möglich. Insbesondere werden dadurch Beschädigungen an der Folie oder Membran vorteilhaft verhindert.

Insbesondere wird der Zuschnitt von einer Transfervorrichtung, wie beispielsweise einem Förderband, so zu der Umlagerungsvorrichtung transportiert, dass eine direkte Übergabe oder ein direktes Einführen in eines der Magazine möglich ist. Beispielsweise sind vorteilhafte Realisierungen denkbar, in denen das zuführende Transportband schräg geneigt ist, so dass der Zuschnitt in das sich bewegende Magazin gleitet. Beispielsweise kann durch geeignete Beschichtung des zuführenden Transportbandes erreicht werden, dass der Zuschnitt leicht abrutscht. Beispielsweise kann die aufnehmende Unterlage oder Oberfläche eines Magazins ebenfalls entsprechend beschichtet sein, so dass ein Einliegen des Zuschnitts ohne Beschädigung ermöglicht wird. Beispielsweise wird durch eine Bewegung oder Rotation der Umlagerungsvorrichtung mit einer festlegbaren Geschwindigkeit erreicht, dass Kräfte derart auf den Zuschnitt wirken, dass dieser möglichst in einer Position oder Orientierung in dem Magazin verbleibt und insbesondere nicht verrutscht und dadurch beispielsweise geknickt oder anderweitig beschädigt wird.

In einer besonders vorteilhaften Ausgestaltung wirken die Fliehkräfte durch die Bewegung der Umlagerungsvorrichtung auf einer näherungsweise kreisförmigen Bahn derart, dass ein Zuschnitt während er in dem Magazin aufgenommen ist, d.h. bevor er auf den Stapel umgelagert wird, auf der Fläche des Magazins verbleibt, auf der er aufgenommen wurde. Beispielsweise sind die auf den Zuschnitt wirkenden Fliehkräfte gerade so groß, dass der Zuschnitt bis kurz vor Erreichen der Umlagerungsposition am Stapel gehalten wird und gerade dann von der Oberfläche des Magazins abgelöst wird, wenn die Umlagerungsvorrichtung eine Position erreicht hat, in welcher der Zuschnitt auf den Stapel auflegbar ist.

Ebenso sind andere Varianten denkbar, in welchen der Zuschnitt während der Bewegung der Umlagerungsvorrichtung innerhalb des Magazins umgelagert wird, beispielsweise die Auflagefläche des Zuschnitts wechselt. Beispielsweise gibt es zwei in etwa gegenüberliegende Auflageflächen des Magazins und der Zuschnitt liegt zunächst mit einer Seite des Zuschnitts auf der einen Auflagefläche und wechselt die Orientierung während der Bewegung hin zum Stapel und kommt mit der anderen Seite auf der anderen Auflagefläche zu liegen.

Die Magazine der Umlagerungsvorrichtung können insbesondere als Fächer bezeichnet werden.

13Gemäß einer Ausgestaltung ist die folien- oder membranartige Warenbahn als eine Separatorfolie oder eine Elektrodenfolie für eine Batteriezelle ausgebildet oder als eine Membran für eine Brennstoffzelle ausgebildet.

14Gemäß einer Ausgestaltung weist das Stapelsystem ferner eine Verarbeitungseinrichtung auf zum Erstellen einer Batteriezelle aus den gestapelten Zuschnitten. Insbesondere kann ein durch die Umlagerungsvorrichtung gefüllter Stapel durch einen nachfolgenden Verarbeitungsschritt zu der Verarbeitungseinrichtung transportiert werden. Die Verarbeitungseinrichtung kann zum Fertigen einer Batteriezelle als Endprodukte des Fertigungsvorganges oder zum Erstellen eines aus der Batteriezelle weiter fertigbaren Batteriemoduls ausgebildet sein.

15 Gemäß einer Ausgestaltung weist das Stapelsystem eine gemeinsame Schneidevorrichtung für die mindestens eine folien- oder membranartige Warenbahn und/ oder mehrere jeweilige Schneidevorrichtungen je folien- oder membran-artiger Warenbahn. Je nach Beschaffenheit der einzelnen Folien oder Membranen kann somit vorteilhafterweise zwischen Verfahren gewählt werden, bei welchen die Folien als durchgehende Warenbahnen übereinander gelegt und nachfolgend geschnitten werden und Verfahren, bei welchen jede Folie oder jede Membran separat geschnitten wird und anschließend die Zuschnitte übereinandergelegt werden.

16. Gemäß einer Ausgestaltung weist das Stapelsystem mehrere Abwickel- oder Umlenk-Walzen auf, wobei jeweils eine folien- oder membran-artige Warenbahn kontinuierlich von einer der mehreren Abwickel- oder Umlenk-Walzen beförderbar ist.

Die Erfindung wird nachfolgend anhand von Ausführungsbeispielen mit Hilfe der Figuren näher erläutert.

Es zeigen:
- Figur 1: eine schematische Darstellung eines Stapelsystems gemäß einem ersten Ausführungsbeispiel der Erfindung;

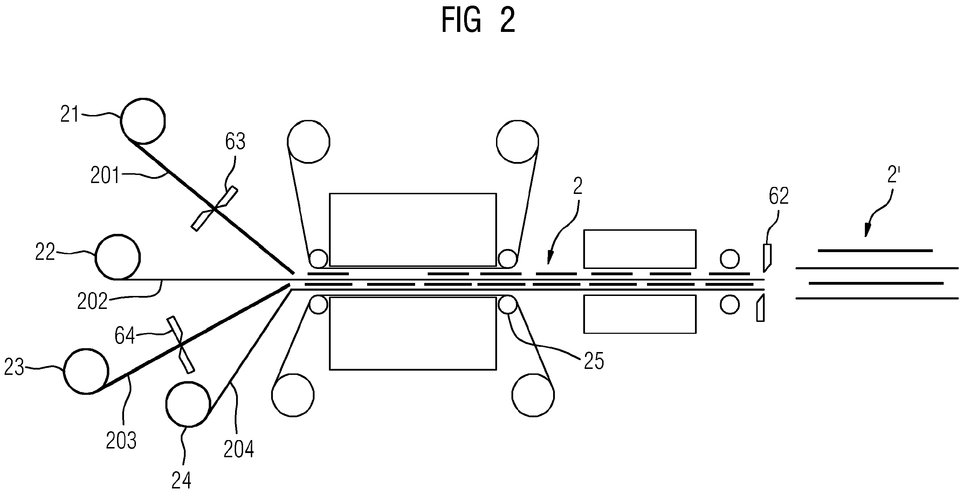

- Figur 2: eine schematische Darstellung von Komponenten eines Stapelsystems gemäß einem zweiten Ausführungsbeispiel der Erfindung;
- Figur 3: eine schematische Darstellung von Komponenten des Stapelsystems gemäß dem zweiten Ausführungsbeispiel der Erfindung;
- Figur 4: eine schematische Darstellung eines Stapelsystems gemäß einem dritten Ausführungsbeispiel der Erfindung;

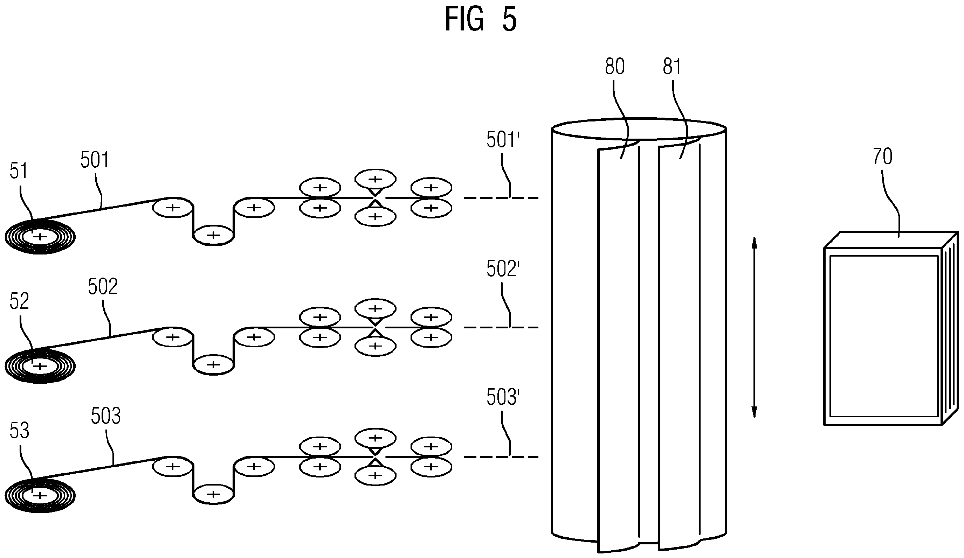

- Figur 5: eine schematische Darstellung eines Stapelsystems gemäß einem vierten Ausführungsbeispiel der Erfindung.

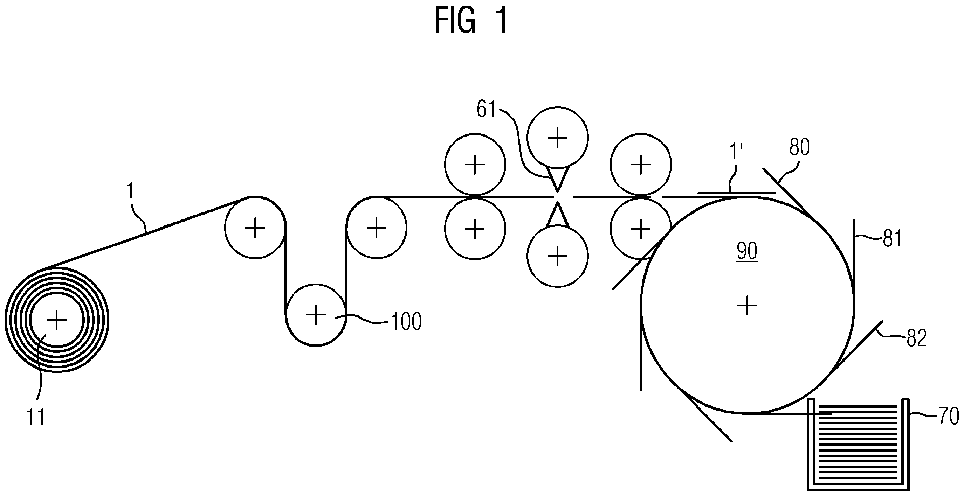

In den Figuren sind funktionsgleiche Elemente mit denselben Bezugszeichen versehen, sofern nichts anderes angegeben ist. Figur 1 zeigt ein Stapelsystem, wie es in einem ersten Ausführungsbeispiel der Erfindung zum Einsatz kommt. Dabei ist eine wickelbare Folie 1 vorgesehen, welche von einer Abwickelwalze 11 abgewickelt wird. Dabei kommen mehrere Zuführ- und Umlenkwalzen zum Einsatz, insbesondere um ein gleichmäßiges Abwickeln, beispielsweise mit gleichmäßigem Spannungsverlauf in der Warenbahn, zu gewährleisten. Die Warenbahn 1 wird einer Schneidevorrichtung 61 zugeführt. Beispielsweise ist zwischen der Abwickelwalze 11 und der Schneidevorrichtung 61 eine Tänzereinheit 100 vorgesehen, um die Bahnspannung auf einen gewünschten Wert regeln zu können. Durch die Schneidevorrichtung 61 werden hintereinander Zuschnitte 1' hergestellt.

Die Stapelvorrichtung dient dazu, ein Stapeln von Schichten einer Batteriezelle zu ermöglichen. Auf einem Stapel 70 werden dafür schichtweise Folienzuschnitte aufgebracht, welche die Ausgangsbasis für die Batteriezelle bilden. Aus mehreren Batteriezellen kann in nachfolgenden Schritten ein Batteriemodul gebildet wilden. Der Fertigungsschritt, bei dem das Verfahren zum Stapeln und die Stapelvorrichtung eingesetzt werden, folgt in einem Fertigungsverfahren für Batterien beispielsweise auf einen Schritt der Elektrodenfertigung und findet beispielsweise vor einem Schritt des Einbringens in eine Verpackung im Rahmen der Zellassemblierung statt.

Der Zuschnitt 1' wird auf die zu fertigende Batterie angepasst. Je nach zu fertigender Batterie sind Batteriezellen mit vorgegebenen Abmessungen nötig. Der Stapel wird somit je nach Abmessungen oder Art der Batteriezelle ausgelegt und die Zuschnitte 1' werden an diese Abmessungen angepasst. Beispielsweise werden quadratische Zuschnitte erstellt. Ein einzelner Zuschnitt 1' wird in ein Magazin 80 von mehreren Magazinen 80, 81, 82 einer rotierenden Umlagerungsvorrichtung 90 eingelegt. Beispielsweise handelt es sich bei der rotierenden Umlagerungsvorrichtung 90 um eine Walze, welche mit zahlreichen Magazinen versehen ist. Die Magazine 80, 81, 82 könnten auch als Register oder Fächer oder Einlegefächer oder Revolvermagazine der Umlagerungsvorrichtung 90 bezeichnet werden.

Beispielsweise soll mit Hilfe der Stapelvorrichtung gemäß dem ersten Ausführungsbeispiel der Erfindung eine Batteriezelle bestehend aus Elektroden- und Separatorschichten auf dem Stapel gebildet werden. Dafür sind beispielsweise neben der beschriebenen und in Figur 1 gezeigten Warenbahn 1 drei weitere Warenbahnen vorgesehen (nicht abgebildet), welche analog mittels jeweiligen weiteren Abwickelwalzen, jeweiligen weiteren Schneidevorrichtungen und jeweiligen weiteren Umlagerungsvorrichtungen jeweilige weitere Zuschnitte auf dem Stapel 70 ablegen. Beispielsweise sind in einer besonders vorteilhaften Ausgestaltung vier Umlagerungsvorrichtungen vorgesehen, welche jeweils einen Zuschnitt in abwechselnder zeitlicher Reihenfolge nach auf den gemeinsamen Stapel 70 umlagern. Beispielsweise sind die vier Umlagerungsvorrichtungen jeweils paarweise gegenüber angeordnet, so dass ein Stapel von vier Seiten mit Zuschnitten befüllt wird.

Beispielsweise sind zwei Umlagerungsvorrichtungen gegenüber voneinander vorgesehen, welche Separatorfolienzuschnitte auf den Stapel umlagern und die zwei weiteren sich gegenüberstehenden Umlagerungsvorrichtungen befördern jeweils Kathodenfolienzuschnitte und Anodenfolienzuschnitte. Insbesondere sind die vier Umlagerungsvorrichtungen sternförmig und symmetrisch um den Stapel 70 herum ausgebildet. Je nach Ausgestaltung der Hardware der jeweiligen Umlagerungsvorrichtung kann es vorteilhaft sein, dass diese nicht in einer einheitlichen horizontalen Höhe ausgebildet sind, sondern dass die Zuschnitte beispielsweise aus unterschiedlicher Position oder Höhe auf den Stapel umgelagert werden.

Die weiteren drei Umlagerungsvorrichtungen zur Zuführung von weiteren drei Warenbahnen wurden der Übersichtlichkeit halber in der Figur 1 nicht abgebildet. Es sind Ausgestaltungen denkbar, in welchen alle vier Stapelsysteme analog ausgebildet sind, insbesondere hinsichtlich der Umlenkwalzen oder vorgesehener Tänzersysteme sowie der Schneidevorrichtungen. Ebenso sind Ausgestaltungen denkbar, in welchen die vorgesehene Hardware je nach zu befördernder Warenbahn unterschiedlich ausgestaltet ist. Beispielsweise sind je nach Folie unterschiedliche Schneider vorteilhaft. Insbesondere sind nur die beiden Systeme zum Umlagern der Separatorfolie analog aufgebaut und weichen von den anderen beiden Systemen ab.

Gemäß einem zweiten Ausführungsbeispiel der Erfindung ist die Stapelvorrichtung derart ausgebildet, dass die Warenbahn 2, welche von einer Umlenkwalze 25 befördert wird, bereits eine geschichtete Warenbahn bestehend aus vier Schichten, insbesondere einer Separatorfolienschicht, einer Kathodenfolienschicht, einer weiteren Separatorfolienschicht sowie einer Anodenschicht, ist. Die Umlenkwalze 25 ist insbesondere ein Walzenpaar. Die Warenbahn bestehend aus den mehreren Schichten wird dann von einer Schneidevorrichtung 62 zu dem Zuschnitt 2' zugeschnitten. Im Bereich vor der Umlenkwalze 25 ist das System derart ausgestaltet, dass vier separate Abwickelwalzen 21, 22, 23, 24 vorgesehen sind, welche jeweils einzeln die vier Folien 201, 202, 304 abwickeln. Dabei werden die beiden Separatorfolien 202, 204 ohne weitere Vorbearbeitung der Umlenkwalze 25 zugeführt. Die beiden Elektrodenfolien 201, 203 werden hingegen bereits hier zugeschnitten und passgenau übereinander zu liegen gebracht. Die abgebildeten zusätzlichen Schneider 63, 64 wurden stark vereinfacht abgebildet. Es ist hierbei insbesondere darauf zu achten, dass die durch die Schneider 63, 64 schon vorab zugeschnittenen Elektrodenzuschnitte vor dem Zuführen zu der Umlenkwalze 25 passgenau übereinander bzw. getrennt durch die Separatorfolie übereinander zu liegen kommen oder zeitgleich in einen sogenannten Laminierer gelangen, der im Bereich vor der Umlenkwalze 25 ausgebildet ist.

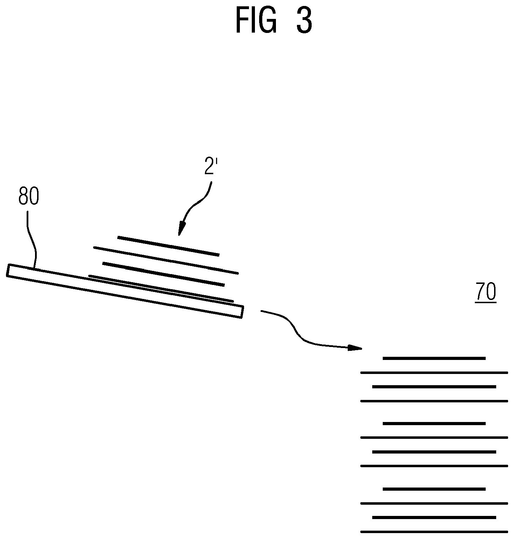

Figur 3 veranschaulicht dazu, wie der Zuschnitt 2' aus einem der Magazine 80 der Umlagerungsvorrichtung 90 auf dem Stapel 70 abgelegt wird. Der Stapel 70 wird somit aus Schichpaketen, welche durch die Umlagerungsvorrichtung 90 zugeführt werden, befüllt.

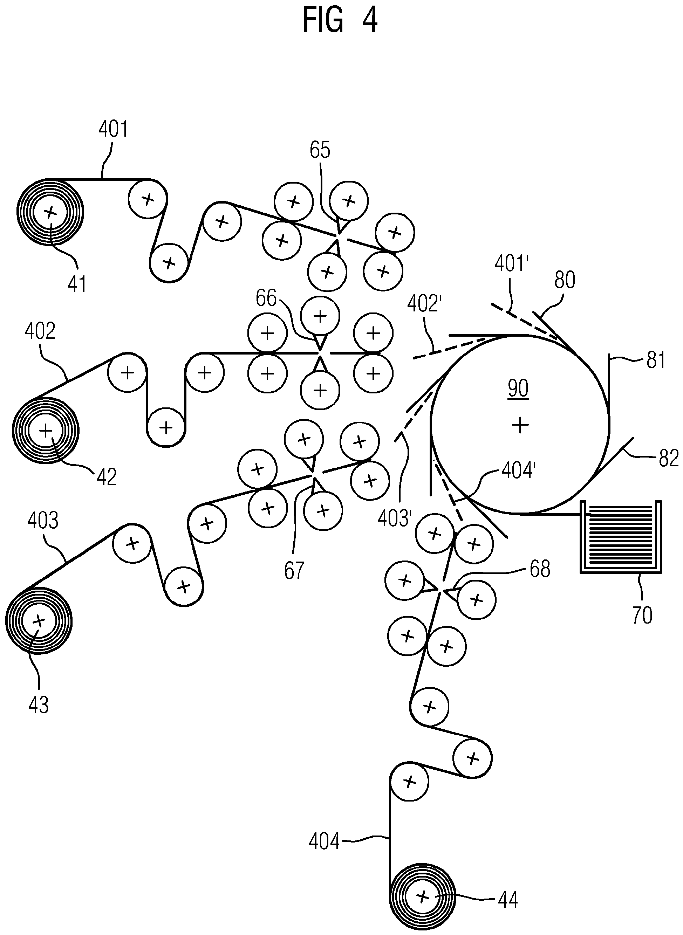

Gemäß einem dritten Ausführungsbeispiel der Erfindung werden Magazine der Umlagerungsvorrichtung 90 abwechselnd mit Elektroden- und Separatorzuschnitten befüllt. Figur 4 zeigt dazu beispielshalber eine denkbare Anordnung, bei der vier Abwickelwalzen 41, 42, 43, 44 vorgesehen sind, welche jeweils eine der vier Schichten 401, 402, 403, 404 einer Batteriezelle zufördern. Beispielsweise sind wiederum zwei Bahnen Separatorfolie und zwei Bahnen Elektrodenfolie, d.h. eine Bahn Kathodenfolie und eine Bahn Anodenfolie, vorgesehen. Mit jeweiligen Schneidevorrichtungen 65, 66, 67, 68 werden die einzelnen Zuschnitte 401', 402', 403', 404' jeweils separat generiert und in separate Magazine der Umlagerungsvorrichtung 90 eingeführt. Das Ablegen der Zuschnitte auf dem Stapel 70 erfolgt somit Schicht für Schicht. Es sind ebenso Ausgestaltungen mit drei Warenbahnen denkbar, beispielsweise sofern das Separatormaterial entsprechend schneller abgewickelt werden kann. Der Prozess des Aufnehmens in das Magazin ist für die vier Zuschnitte 401', 402', 403', 404' zeitlich derart aufeinander abzustimmen, dass benachbarte befüllte Magazine die Zuschnitte in der passenden Reihenfolge auf den Stapel umlagern können.

In einer vierten Ausgestaltung ist das Stapelsystem derart ausgestaltet, dass die Zuschnitte in den verschiedenen Magazinen 80, 81 separat aufgenommen werden, die Abmessung der Umlagerungsvorrichtung 90 es jedoch erlauben, dass die Zuschnitte 501', 502', 503' in einer Richtung quer zur Bewegungsrichtung der Umlagerungsvorrichtung 90 versetzt aufgenommen werden. Der zuführende Abschnitt der Stapelvorrichtung, welcher die jeweiligen Abwickelwalzen 51, 52, 53 mit den weiteren vorgesehenen Komponenten gemäß einem der vorherigen Ausführungsbeispiele aufweist, können dann vorteilhafterweise in etwa in einer Horizontalen nebeneinander angeordnet sein. Für ein Stapeln der Zuschnitte 501', 502', 503' übereinander auf den Stapel 70 kann dazu beispielsweise eine Bewegung des Stapels 70 ebenfalls in die Richtung senkrecht zur Umlagerungsvorrichtung 90 vorgesehen sein. Insbesondere wird der Stapel 70 in die Richtung der Rotationsachse der Umlagerungsvorrichtung bewegt. Beispielsweise ist die mittlere Warenbahn 502 eine Separatorfolie, welche somit zwischen jedem Anodenfolienzuschnitt und jedem Kathodenfolienzuschnitt auf dem Stapel 70 abgelegt werden kann.

Obwohl die Erfindung im Detail durch die Ausführungsbeispiele näher illustriert und beschrieben wurde, so ist die Erfindung nicht durch die offenbarten Beispiele eingeschränkt und andere Variationen und Kombinationen können vom Fachmann hieraus abgeleitet werden, ohne den Schutzumfang der Erfindung zu verlassen.

## Patentansprüche

1. Verfahren zum kontinuierlichen Stapeln von Zuschnitten mindestens einer folien- oder membran-artigen Warenbahn auf einen Stapel (70),
- wobei die mindestens eine folien- oder membran-artige Warenbahn (1, 2) kontinuierlich zugeführt wird,
- wobei die mindestens eine folien- oder membran-artige Warenbahn (1, 2) auf eine von den Abmessungen des Stapels (70) abhängige Größe zu einem Zuschnitt (1', 2') zugeschnitten wird,
- wobei der Zuschnitt (1', 2') von einem Magazin (80) einer sich kontinuierlich bewegenden, insbesondere rotierenden, Umlagerungsvorrichtung (90) mit mehreren Magazinen (80, 81, 82) aufgenommen wird,
- wobei der aufgenommene Zuschnitt (1', 2') von dem Magazin (80) auf den Stapel umgelagert wird, bevor das Magazin (80) einen nachfolgenden Zuschnitt aufnimmt.

2. Verfahren nach Anspruch 1, wobei die mindestens eine folien- oder membran-artige Warenbahn (1, 201, 202, 203, 204) mittels einer Abwickel- oder Umlenkwalze (11, 21, 22, 23, 24) zugeführt wird.

3. Verfahren nach Anspruch 1 oder 2, wobei die mindestens eine folien- oder membran-artige Warenbahn (1, 201, 202, 203, 204) als eine Separatorfolie oder eine Elektrodenfolie für eine Batteriezelle ausgebildet ist.

4. Verfahren nach Anspruch 1 oder 2, wobei die mindestens eine folien- oder membran-artige Warenbahn (1) als eine Membran für eine Brennstoffzelle ausgebildet ist.

5. Verfahren nach einem der vorstehenden Ansprüche, wobei mehrere folien- oder membran-artige Warenbahnen (201, 202, 203, 204) zugeführt werden und als ein gemeinsamer Zuschnitt zugeschnitten werden.

6. Verfahren nach einem der vorstehenden Ansprüche, wobei mehrere hintereinanderfolgend zugeschnittene gemeinsame Zuschnitte (2') in jeweilige Magazine (80, 81, 82) der Umlagerungsvorrichtung aufgenommen werden und hintereinander folgend auf den Stapel (70) umgelagert werden.

7. Verfahren nach einem der vorstehenden Ansprüche, wobei mehrere folien- oder membran-artige Warenbahnen (401, 402, 403, 404, 501, 502, 503) zugeführt werden und als jeweiliger separater Zuschnitt (401', 402', 403', 404', 501', 502', 503') zugeschnitten werden.

8. Verfahren nach einem der vorstehenden Ansprüche, wobei jeweilige separate Zuschnitte (401', 402', 403', 404', 501', 502', 503') in jeweilige Magazine (80, 81, 82) der Umlagerungsvorrichtung aufgenommen werden und hintereinander folgend auf den Stapel (70) umgelagert werden.

9. Verfahren nach einem der vorstehenden Ansprüche, wobei jeweils eine folien- oder membran-artige Warenbahn (401, 402, 403, 404, 501, 502, 503) kontinuierlich von einer jeweiligen von mehreren Abwickel- oder Umlenk-Walzen (41, 42, 43, 44, 51, 52, 53) befördert wird.

10. Verfahren nach einem der vorstehenden Ansprüche, wobei mindestens drei folien- oder membranartige Warenbahnen, insbesondere eine Anodenfolie, eine Separatorfolie und eine Kathodenfolie, vorgesehen sind.

11. Verfahren nach einem der vorstehenden Ansprüche, wobei mindestens vier folien- oder membran-artige Warenbahnen, insbesondere eine Separatorfolie, eine Anodenfolie, eine weitere Separatorfolie und eine Kathodenfolie vorgesehen sind.

12. Stapelsystem zum kontinuierlichen Stapeln von Zuschnitten mindestens einer folien- oder membran-artigen Warenbahn (1, 2, 401, 402, 403) auf einen Stapel (70), aufweisend
- mindestens eine kontinuierliche Zuführeinrichtung, insbesondere eine Abwickel- oder Umlenk-Walze (11, 21, 22, 23, 24, 41, 42, 43, 44), zum kontinuierlichen Zuführen mindestens einer folien- oder membran-artigen Warenbahn (1, 2, 401, 402, 403, 404),
- mindestens eine Schneidevorrichtung (61, 62, 65, 66, 67, 68) zum Zuschneiden eines Zuschnitts (1', 2', 401', 402', 403', 404') der mindestens einen folien- oder membran-artigen Warenbahn (1, 2) auf eine von den Abmessungen des Stapels (70) abhängige Größe,
- eine sich kontinuierlich bewegende Umlagerungsvorrichtung (90) mit mehreren Magazinen (80, 81, 82) zum Aufnehmen des Zuschnitts (1', 2', 401', 402', 403', 404') durch eines der mehreren Magazine (80), wobei der aufgenommene Zuschnitt (1', 2', 401', 402', 403', 404') von dem Magazin (80) auf den Stapel umlagerbar ist, bevor das Magazin einen nachfolgenden Zuschnitt aufnimmt.

13. Stapelsystem nach Anspruch 12, wobei die mindestens eine folien- oder membran-artigen Warenbahn (1, 2, 401, 402, 403) als eine Separatorfolie oder eine Elektrodenfolie für eine Batteriezelle ausgebildet ist oder als eine Membran für eine Brennstoffzelle ausgebildet ist.

14. Stapelsystem nach Anspruch 12 oder 13, das Stapelsystem ferner aufweisend eine Verarbeitungseinrichtung zum Erstellen einer Batteriezelle aus den gestapelten Zuschnitten.

15. Stapelsystem nach einem der Ansprüche 12 bis 14, aufweisend eine gemeinsame Schneidevorrichtung (62) für die mindestens eine folien- oder membranartige Warenbahn und/ oder mehrere jeweilige Schneidevorrichtungen (61, 63, 64, 65, 66, 67, 68) je folien- oder membran-artiger Warenbahn.

16. Stapelsystem nach einem der Ansprüche 12 bis 15, aufweisend mehrere Abwickel- oder Umlenk-Walzen (41, 42, 43, 44, 51, 52, 53), wobei jeweils eine folien- oder membran-artige Warenbahn (401, 402, 403, 404, 501, 502, 503) kontinuierlich von einer der mehreren Abwickel- oder Umlenk-Walzen (41, 42, 43, 44, 51, 52, 53) beförderbar ist.
